(19)

Europäisches Patentamt

European Patent Office

Office européen des brevets

(11) **EP 3 800 392 A2**

(12) **EUROPEAN PATENT APPLICATION**

(43) Date of publication:
07.04.2021  Bulletin 2021/14

(51) Int Cl.:
*F16L 58/08* (2006.01)      *C23C 30/00* (2006.01)
*C23C 4/06* (2016.01)       *C23C 4/08* (2016.01)
*C23C 4/12* (2016.01)       *C23C 28/00* (2006.01)
*C23C 4/131* (2016.01)

(21) Application number: 20174479.4

(22) Date of filing: 02.04.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 17.04.2012  CN 201210112918
17.04.2012  CN 201210112698
17.04.2012  CN 201210112678

(62) Document number(s) of the earlier application(s) in
accordance with Art. 76 EPC:
13778196.9 / 2 840 292

(27) Previously filed application:
02.04.2013 PCT/CN2013/073656

(71) Applicant: Xinxing Ductile Iron Pipes Co., Ltd
Wu'an, Hebei 056300 (CN)

(72) Inventors:
• ZHANG, Tongbo
  Wu'an, Hebei 056300 (CN)
• LI, Jun
  Wu'an, Hebei 056300 (CN)
• WANG, Enqing
  Wu'an, Hebei 056300 (CN)
• XIN, Shaoguang
  Wu'an, Hebei 056300 (CN)
• ZHANG, Yongjie
  Wu'an, Hebei 056300 (CN)

• WANG, Shifeng
  Wu'an, Hebei 056300 (CN)
• LI, Haishun
  Wu'an, Hebei 056300 (CN)
• SHEN, Yong
  Wu'an, Hebei 056300 (CN)
• ZHAO, Fuen
  Wu'an, Hebei 056300 (CN)
• YE, Weihe
  Wu'an, Hebei 056300 (CN)
• QI, Xiaoping
  Wu'an, Hebei 056300 (CN)
• XIA, Zhaomeng
  Wu'an, Hebei 056300 (CN)
• ZHANG, Sanhui
  Wu'an, Hebei 056300 (CN)
• ZHANG, Ming
  Wu'an, Hebei 056300 (CN)
• ZHAO, Wenliang
  Wu'an, Hebei 056300 (CN)

(74) Representative: Office Kirkpatrick
Avenue Wolfers, 32
1310 La Hulpe (BE)

Remarks:
This application was filed on 13-05-2020 as a
divisional application to the application mentioned
under INID code 62.

(54) **ANTICORROSIVE COATING FOR BURIED BLACK METAL-BASED PIPELINE AND METHOD FOR SPRAYING SAME**

(57)      The invention discloses a composite anti-corrosion coating for a buried ferrous metal-based pipeline. The anti-corrosion coating contains a zinc-aluminum-rare earth alloy layer, a zinc-aluminum-rare earth pseudo-alloy layer or a zinc-aluminum-magnesium-rare earth multi-element pseudo-alloy layer, wherein the zinc-aluminum-rare earth alloy layer comprises the following components in percentage by weight: 4.7-60% of Al, 0.02-5% of RE and the balance of Zn; the zinc-aluminum-rare earth pseudo-alloy layer comprises the following components in percentage by weight: 5-60% of Al, 0.02-10% of RE and the balance of Zn; and a zinc-aluminum-magnesium-rare earth metal coating comprises the following components in percentage by weight: 5-85% of Al, 0.01-5% of RE, 30-95% of Zn and 0.05-10% of Mg. The coating disclosed by the invention has the advantages of low porosity, good self-sealing effect, stable anti-corrosion performance, low manufacturing cost, good economic applicability and the like, and can be applied in a highly corrosive soil environment.

EP 3 800 392 A2

## Description

### Field of the Invention

The invention relates to a composite anti-corrosion coating and a spraying method thereof, in particular to an active metal anti-corrosion coating outside a buried nodular cast iron pipeline and a spraying method thereof.

### Background of the Invention

An electric arc thermal spraying technology has a large number of mature applications on surfaces of steel structures in an atmosphere environment, and the involved typical coatings comprise zinc layers, aluminum layers and zinc-aluminum layers. In order to prolong the service life, sealing primer paint + intermediate paint + finish paint are coated on the outer surfaces of the zinc layers, the aluminum layers and the zinc-aluminum layers. There are also methods adopting zinc-aluminum-magnesium pseudo-alloys. Up till now, almost all of documents about alloy/pseudo-alloy coatings are focused on the application studies in an atmosphere environment, but the studies about corrosion resistance of the electric arc thermal sprayed coatings in soil are rarely reported.

Chinese invention patent No. CN101451243 B, entitled Method and Process for Electric Arc Spraying of Composite Anti-corrosion Coating System on Steel structure, discloses a method for electric arc spraying of an anti-corrosion coating on a steel structure. The method comprises the steps of firstly performing sandblasting treatment on the surface of a steel structure and then sequentially spraying an anodic metal coating, a sealing primer paint coating, an intermediate paint coating and a finish paint coating. The effects of preventing ocean climate and city acid rain climate from damaging the steel structure are realized, but the method has the shortcomings of long construction period and greatly increased cost caused by coating for many times and does not research the anti-corrosion effect in a soil environment.

The Chinese patent application No. CN201110111175.6, entitled Composite Coating with Resistance to Marine Corrosion and Hot Corrosion and Preparation Method thereof, discloses a composite coating with resistance to marine corrosion and hot corrosion and a preparation method thereof. The preparation method comprises the following steps: firstly performing electric arc spraying of a FeCrAlRE powder core wire on a steel matrix to form a coating and then spraying a ZnAlMgRE powder core wire on the surface of the FeCrAlRE coating to form a protective coating, wherein the ZnAlMgRE powder core wire contains rare earth-nickel powder, and the rare earth-nickel powder comprises 60% of nickel and 40% of rare earth (RE). By adopting the technology, the anti-corrosion effect of the coating under ocean, atmosphere and hot gas environments can be improved, but the shortcoming is that as nickel can increase the electric potential of the coating, the protection performance of a sacrificial anode is obviously weakened, the coating is not suitable for a soil electrochemical corrosive environment, and the patent application does not test the corrosion-resistant performance of the coating in the soil environment.

Corrosion factors in the soil environment are more complex than those in the atmosphere environment, and the corrosion rate of metals in strongly corrosive soil is much higher than that in the atmosphere environment. Buried metal pipelines contain steel pipes and iron pipes, as the corrosion rate of the steel pipes is much higher than that of iron, the outer coatings of the buried steel pipes generally adopt organic coatings + cathode protection measures at present, and the detection and maintenance cost is higher; and furthermore, a hydrogen embrittlement defect is easy to occur due to impressed current cathode protection, and sometimes, the buried steel pipes have leakage phenomena at many places after being used for one year, thereby causing huge economic loss and causing great social negative effects. By contrast, the corrosion rate of nodular iron pipes is much lower than that of the steel pipes, and the complex cathode protection measure as complex as that for the steel pipes is not required. Generally, metal zinc layers or zinc-aluminum coatings are electric-arc sprayed on the surfaces of the nodular iron pipes and hole-sealing finishing layers are further coated on the surfaces of the metal coatings. A traditional Zn coating has the defects that, on the one hand, the porosity is higher and the anti-corrosion performance is weakened, and on the other hand, in seawater or an environment with higher content of chloride ions, due to the intrusion of the chloride ions, carbonates and other corrosion products which are relatively difficult to dissolve in water on the surface of the Zn coating are rapidly replaced by chlorine salt compounds which are loose and easy to dissolve, and the self-healing performance of the corrosion products is greatly weakened; and although a ZnAl coating integrates the advantages of a zinc coating and an aluminum coating, the porosity is still larger, the density of the corrosion products is poor, the self-sealing effect is still not thorough, and thus the corrosion resistance of the ZnAl coating in the strongly corrosive soil environment is poorer.

With the rapid development of modern industry, the soil corrosiveness has been increasingly enhanced, and the strongly corrosive soil regions have become increasingly widespread. The existing Zn coating and the ZnAl coating are increasingly unable to meet the needs of the anti-corrosion coatings outside the buried nodular iron pipes. Therefore, it is urgent to develop the performance studies of the anti-corrosion coating outside the buried nodular iron pipeline in the strongly corrosive soil environment.

## Summary of the Invention

The invention provides an anti-corrosion coating for a buried ferrous metal-based pipeline and a spraying method thereof, having the advantages of low porosity, good self-sealing effect, stable anti-corrosion performance, low manufacturing cost, good economic applicability and the like.

In order to solve the problems in the prior art, the following technical solution adopted in the invention is:
A composite anti-corrosion coating for a buried ferrous metal-based pipeline comprises a zinc-aluminum-rare earth (RE) alloy layer, and the zinc-aluminum-rare earth alloy layer comprises the following components in percentage by weight: 4.7-85% of Al, 0.01-10% of rare earth (RE) and the balance of Zn.

In the composite anti-corrosion coating for the buried ferrous metal-based pipeline disclosed by the invention, the zinc-aluminum-rare earth alloy layer comprises the following components in percentage by weight: 4.7-60% of Al, 0.02-5% of RE and the balance of Zn; and a hole-sealing finishing layer is coated on the surface of the zinc-aluminum-rare earth alloy layer.

According to the composite anti-corrosion coating for the buried ferrous metal-based pipeline disclosed by the invention, in the zinc-aluminum-rare earth alloy layer, a metal phase formed by zinc-aluminum-rare earth metal contains a zinc-rich phase, an aluminum-rich phase, a zinc-aluminum-rare earth alloy-rich phase and an intermetallic compound thereof, preferably, the contents by weight of the metal compounds are respectively as follows:

the zinc-rich phase accounts for 60.0-95.0%, the aluminum-rich phase accounts for 4.8-35.0%, the zinc-aluminum-rare earth alloy-rich phase and the intermetallic compound thereof account for 0.01-5.0%, and the sum is 100%; further preferably, the zinc-rich phase accounts for 70.0-88.0%, the aluminum-rich phase accounts for 10.0-28.0% and the zinc-aluminum-rare earth alloy-rich phase and the intermetallic compound thereof account for 0.02-5.0%; more preferably, the zinc-rich phase accounts for 75.0-85.0%, the aluminum-rich phase accounts for 12.0-25.0% and the zinc-aluminum-rare earth alloy-rich phase and the intermetallic compound thereof account for 0.05-3.0%, wherein preferably, the zinc-rich phase comprises 54-96% of Zn, 0.5-42% of Al and 0.01-5.0% of RE; the aluminum-rich phase comprises 50-95% of Al, 1.5-45% of Zn and 0.01-5.0% of RE; and the zinc-aluminum-rare earth alloy-rich phase and the intermetallic compound thereof comprise 65-99% of Zn, 0.5-35% of Al and 0.05-3.0% of RE. Through scanning electron microscope and energy spectrum analysis tests, it is found that the phase structure and the distribution can obviously improve the adhesion, the porosity and the corrosion resistance of the zinc-aluminum-rare earth alloy layer, and the main reasons are that, the trace rare earth element is solid-dissolved in an eutectic phase, the vast majority of the rare earth element forms multi-element intermetallic compounds with zinc, aluminum, impurity iron and silicon, a small part of these intermetallic compounds are distributed intragranularly, and most of the intermetallic compounds are enriched on a grain boundary, thereby playing a role in refining grains and the texture of the coating and better inhibiting intergranular corrosion; and the inventor also finds that the rare earth can purify the impurities, refine the grains, be enriched on the surface of the coating and form a dense and uniform oxide layer on the surface, and it can well prevent external impurity atoms from diffusing into an alloy and further delay the oxidation and corrosion process.

According to the composite anti-corrosion coating for the buried ferrous metal-based pipeline disclosed by the invention, the anti-corrosion coating comprises a zinc-aluminum-rare earth pseudo-alloy layer, wherein the zinc-aluminum-rare earth pseudo-alloy layer comprises the following components in percentage by weight: 5-60% of Al, 0.02-10% of RE and the balance of Zn; and the zinc-aluminum-rare earth pseudo-alloy layer is prepared by adopting an electric arc spraying method.

According to the composite anti-corrosion coating for the buried ferrous metal-based pipeline disclosed by the invention, in the zinc-aluminum-rare earth pseudo-alloy layer, a metal phase formed by zinc-aluminum-rare earth metal contains a zinc-rich phase, an aluminum-rich phase, a zinc-aluminum-rare earth alloy-rich phase and an intermetallic compound thereof, preferably, the contents by weight of the metal compounds are respectively as follows:

the zinc-rich phase accounts for 50.0-85.0%, the aluminum-rich phase accounts for 10.0-45.0%, the zinc-aluminum-rare earth alloy-rich phase and the intermetallic compound thereof account for 0.02-10%, and the sum is 100%; further preferably, the zinc-rich phase accounts for 68.0-85.0%, the aluminum-rich phase accounts for 10.0-30.0% and the zinc-aluminum-rare earth alloy-rich phase and the intermetallic compound thereof account for 0.02-8%; more preferably, the zinc-rich phase accounts for 73.0-85.0%, the aluminum-rich phase accounts for 12.0-25.0% and the zinc-aluminum-rare earth alloy-rich phase and the intermetallic compound thereof account for 0.02-5%, wherein preferably, the zinc-rich phase comprises 58-98% of Zn, 1-40% of Al and 1-5.0% of RE; the aluminum-rich phase comprises 55-98% of Al, 1.5-40% of Zn and 0.01-5.0% of RE; and the zinc-aluminum-rare earth alloy-rich phase and the intermetallic compound thereof comprise 60-95% of Zn, 0.5-35% of Al and 0.1-10.0% of RE.

In the composite anti-corrosion coating for the buried ferrous metal-based pipeline disclosed by the invention, a hole-sealing finishing layer is coated on the surface of the zinc-aluminum-rare earth pseudo-alloy layer.

According to the composite anti-corrosion coating for the buried ferrous metal-based pipeline disclosed by the invention, preferably, the hole-sealing finishing layer is an aqueous coating layer, a solvent type coating layer or a powder coating layer, wherein the thickness of the hole-sealing finishing layer is 60-180$\mu$m, preferably 100-150$\mu$m.

According to the composite anti-corrosion coating for the buried ferrous metal-based pipeline disclosed by the invention, Zn accounts for 56-85% and Al accounts for 14-42%.

According to the composite anti-corrosion coating for the buried ferrous metal-based pipeline disclosed by the invention, RE accounts for preferably 0.05-2%, further preferably 0.1-1.0% and more preferably 0.6-1.0%.

According to the composite anti-corrosion coating for the buried ferrous metal-based pipeline disclosed by the invention, the weight per unit area of the zinc-aluminum-rare earth alloy layer or the zinc-aluminum-rare earth pseudo-alloy layer is 130-400g/m$^2$, preferably 200g/m$^2$.

According to the composite anti-corrosion coating for the buried ferrous metal-based pipeline disclosed by the invention, RE is at least one of lanthanum, cerium, praseodymium, neodymium, promethium, samarium, europium, gadolinium, terbium, dysprosium, holmium, erbium, thulium, ytterbium, lutetium, scandium and yttrium; preferably at least one of lanthanum, cerium, praseodymium and neodymium; and more preferably, at least one of lanthanum and cerium.

A composite anti-corrosion coating for a buried ferrous metal-based pipeline comprises a zinc-aluminum-magnesium-rare earth multi-element pseudo-alloy layer, preferably, a hole-sealing finishing layer is coated on the surface of the zinc-aluminum-magnesium-rare earth multi-element pseudo-alloy layer; and the ferrous metal-based pipeline is preferably an iron-based pipeline, more preferably a cast iron pipeline, and more preferably a nodular cast iron pipeline; the zinc-aluminum-magnesium-rare earth multi-element pseudo-alloy layer comprises the following components in percentage by weight:

5-85% of Al;
0.01-5% of RE;
30-95% of Zn; and
0.05-10% of Mg.

According to the composite anti-corrosion coating for the buried ferrous metal-based pipeline disclosed by the invention, in the zinc-aluminum-magnesium-rare earth multi-element pseudo-alloy layer, a metal phase formed by zinc-aluminum-magnesium-rare earth metal contains a zinc-rich phase, an aluminum-rich phase, an aluminum-magnesium alloy-rich phase and a small quantity of a zinc-aluminum-magnesium-rare earth alloy-rich phase and an intermetallic compound thereof, preferably, the contents by weight of the metal compounds are respectively as follows:

the zinc-rich phase accounts for 35.0-90.0%, the aluminum-rich phase accounts for 8.0-55.0%, the aluminum-magnesium alloy-rich phase accounts for 0.5-10.0%, the zinc-aluminum-magnesium-rare earth alloy-rich phase and the intermetallic compound thereof account for 0.01-5.0%, and the sum is 100%;
further preferably, the zinc-rich phase accounts for 50.0-85.0%, the aluminum-rich phase accounts for 10.0-45.0%, the aluminum-magnesium alloy-rich phase accounts for 0.5-8.0% and the zinc-aluminum-magnesium-rare earth alloy-rich phase and the intermetallic compound thereof account for 0.05-4.0%;
more preferably, the zinc-rich phase accounts for 65.0-80.0%, the aluminum-rich phase accounts for 15.0-33.0%, the aluminum-magnesium alloy-rich phase accounts for 0.5-5.0% and the zinc-aluminum-magnesium-rare earth alloy-rich phase and the intermetallic compound thereof account for 0.05-3.0%;
preferably, the zinc-rich phase comprises 55-98% of Zn, 1-40% of Al, 0.01-10% of Mg and 0.01-5.0% of RE; the aluminum-rich phase comprises 50-90% of Al, 5-45% of Zn, 0.01-10% of Mg and 0.01-5.0% of RE; the aluminum-magnesium alloy-rich phase comprises 90-95% of Al, 1-5% of Mg and 0.01-5.0% of RE; and preferably, the zinc-aluminum-magnesium-rare earth alloy-rich phase and the intermetallic compound thereof comprise 60-90% of Zn, 5-30% of Al, 0.01-1.0% of Mg and 1-10.0% of RE. Through microstructure analysis and corrosion-resistant performance tests, it is found that in the zinc-aluminum-magnesium-rare earth metal coating, the intermetallic compounds formed by the rare earth, the Al, the Mg, the Si and other elements are distributed on the grain boundary or in the boundary like spheres and short rods, and a large number of dislocations are distributed in the texture. The rare earth also starts to form many new phases containing the rare earth element with the magnesium and other elements in the alloy and can simultaneously enable the shapes and the sizes of second phases to turn from long strips and the like to short rod-like particles, the particle size also becomes very small, the particles are distributed in a dispersing manner, and the intermetallic compounds can inhibit the slippage of the grain boundary, simultaneously hinder the dislocation motion and further play a strengthening role; and the inventor also finds that the magnesium can effectively prevent the intergranular corrosion of a zinc-aluminum alloy, but the magnesium also reduces the flowability and the plasticity of the alloy, the content is thus greatly limited, but the addition of the rare earth can improve the flowability and the plasticity of the coating, so that the corrosion resistance of the coating can be improved by appropriately increasing the content of the magnesium element and it can be seen that the rare earth and the magnesium can play a synergistic role.

According to the composite anti-corrosion coating for the buried ferrous metal-based pipeline disclosed by the invention, RE accounts for preferably 0.05-2%, further preferably 0.1-1.0% and more preferably 0.6-1.0%.

According to the composite anti-corrosion coating for the buried ferrous metal-based pipeline disclosed by the invention, a preparation method of the zinc-aluminum-magnesium-rare earth multi-element pseudo-alloy layer can adopt equal-diameter constant-speed, equal-diameter different-speed and constant-speed different-diameter spraying ways.

According to the composite anti-corrosion coating for the buried ferrous metal-based pipeline disclosed by the invention, preferably, the hole-sealing finishing layer is an organic or inorganic coating layer, and the thickness of the hole-sealing layer is 100-150$\mu$m.

According to the composite anti-corrosion coating for the buried ferrous metal-based pipeline disclosed by the invention, the weight per unit area of the zinc-aluminum-magnesium-rare earth multi-element pseudo-alloy layer is 130-400g/m$^2$, preferably 200g/m$^2$.

According to the composite anti-corrosion coating for the buried ferrous metal-based pipeline disclosed by the invention, the zinc-aluminum-magnesium-rare earth multi-element pseudo-alloy layer further comprises one or any combination of more than one of Cu, In, Mn, Sn, Li, Si, Ti and Pb.

According to the composite anti-corrosion coating for the buried ferrous metal-based pipeline disclosed by the invention, RE is at least one of lanthanum, cerium, praseodymium, neodymium, promethium, samarium, europium, gadolinium, terbium, dysprosium, holmium, erbium, thulium, ytterbium, lutetium, scandium and yttrium; preferably at least one of lanthanum, cerium, praseodymium and neodymium; and more preferably, at least one of lanthanum and cerium.

A spraying method of an anti-corrosion coating for a ferrous metal-based pipeline adopts electric arc spraying, and the method is as follows:

when the coating comprises ZnAlRE elements, depositing a ZnAlRE three-element pseudo-alloy layer on a pipe matrix by utilizing two wires with different compositions or depositing an ZnAlRE alloy layer on the pipe matrix by utilizing two ZnAlRE alloy wires with the same composition; preferably, forming a zinc-aluminum-rare earth pseudo-alloy coating by adopting a rare earth-zinc wire and an aluminum wire or forming a zinc-aluminum-rare earth alloy coating by adopting two identical zinc-aluminum-rare earth alloy wires;
when the coating comprises ZnAlMgRE elements, depositing a ZnAlMgRE four-element pseudo-alloy layer on the pipe matrix by utilizing two wires with the different compositions; preferably, forming a zinc-aluminum-magnesium-rare earth pseudo-alloy coating by adopting a rare earth-zinc wire and an aluminum-magnesium alloy wire;
the wire/wires for the pseudo-alloy coating is/are selected from one or two of the following wires: ZnAlRE powder-wrapping wire, ZnAlRE cored wire, ZnAlRE alloy wire, Zn cored wire, Zn powder-wrapping wire, Al cored wire, Al powder-wrapping wire, AlRE cored wire, AlRE powder-wrapping wire, AlMg powder-wrapping wire, AlMg cored wire, ZnAl cored wire, ZnAl powder-wrapping wire, ZnRE alloy wire, ZnRE cored wire, ZnRE powder-wrapping wire, ZnAlMg alloy wire, ZnAlMg cored wire, ZnAlMg powder-wrapping wire, AlMgRE alloy wire, AlMgRE cored wire, AlMgRE powder-wrapping wire, ZnAlMgRE alloy wire and ZnAlMgRE cored wire.

A ferrous metal-based pipeline containing the composite anti-corrosion coating is as follows: the ferrous metal is iron, and the pipeline is a cast iron pipeline, preferably a nodular cast iron pipeline.

A nodular cast iron pipe fitting is formed by spraying the coating on a matrix of the pipe fitting, and preferably, the bonding strength between the metal coating and a pipeline is 12.5-16.5Mpa.

An anti-corrosion method for a nodular cast iron pipe fitting is as follows: spraying the coating on a matrix of the pipe fitting.

A preparation method of a corrosion-resistant nodular cast iron pipe fitting adopts the spraying method to spray the coating on a matrix of the pipe fitting, and preferably, the corrosion-resistant nodular cast iron pipe fitting is soil corrosion-resistant and is suitable for a soil environment.

The porosity of the metal coating is tested by adopting a gray-scale method, and the porosity is 1.5-3.6%; the coating has no red rust after a salt spray test is performed for 9000h; after an accelerated corrosion test is performed on the coating in an ocean environment for 100 days, the polarization resistance is 9000-10000 $\Omega \cdot$cm$^2$; preferably, the soil electrolysis accelerated corrosion rate of the coating is 0.03-0.06g/cm$^2$; and preferably, after a soil high-temperature accelerated corrosion test is performed on the coating for 30 days, the polarization resistance is 5950-6800 $\Omega \cdot$cm$^2$.

The electric arc spraying of the rare earth-(magnesium) zinc-aluminum alloy coating must comprehensively consider the influence of the rare earth element and the magnesium element on corrosion resistance of the coating, the corrosion resistance of the coating further relates to adhesion, porosity, electrochemical performances, resistance to salt spray corrosion, resistance to soil corrosion and the like, and all the performances are decided by the alloy microscopic phase texture structure. Through metallographic structure observation of the alloy coating, it is found that when the coating comprises Zn, Al and RE elements, the content of the zinc-aluminum-rare earth alloy phase and the intermetallic compound thereof is 0.02-10%; and when the coating further contains Mg element, the content of the zinc-aluminum-magnesium-rare earth alloy phase and the intermetallic compound thereof is 0.01-5.0%. At this time, the RE element can form the intermetallic compounds with Zn, Al, Mg and other impurities, the intermetallic compounds are mainly enriched on the grain boundary, a small part of the intermetallic compounds are distributed intragranularly, these intermetallic compounds can change the texture structure of the alloy phase, namely thick, big and continuous dendrites are refined to small spherical or short rod-like grains, the dispersing distribution state can enable the structure of the alloy phase to be more uniform and effectively inhibit the intergranular corrosion, and a rare earth conversion film is very dense and covered on the surface of the coating so as to be capable of resisting the intrusion of external corrosive media and further improve the corrosion resistance of the coating. Through the comparative tests of soil corrosion-resistant electrochemical performances of the coatings with the different alloy phases, the inventor finds that, preferably, in the zinc-aluminum-rare earth coating, when the weight content of the zinc-rich phase is 50.0-85.0%, the weight content of the aluminum-rich phase is 10.0-45.0% and the weight content of the zinc-aluminum-rare earth alloy-rich phase and the intermetallic compound thereof is 0.02-10%, the polarization resistance of the coating is 5900-6500 $\Omega \cdot cm^2$ after the soil accelerated corrosion test is performed for 30 days; and compared with the zinc-aluminum alloy coating, the polarization resistance is greatly improved, indicating that the resistance to soil corrosion is significantly improved. Preferably, in the zinc-aluminum-magnesium-rare earth coating, when the weight content of the zinc-rich phase is 35.0-90.0%, the weight content of the aluminum-rich phase is 8.0-55.0%, the weight content of the aluminum-magnesium alloy-rich phase is 0.5-10.0% and the weight content of the zinc-aluminum-magnesium-rare earth alloy-rich phase and the intermetallic compound thereof is 0.01-5.0%, the polarization resistance of the coating is 6400-6800 $\Omega \cdot cm^2$ after the soil accelerated corrosion test is performed for 30 days; and compared with the zinc-aluminum alloy coating, the polarization resistance is greatly improved, indicating that the resistance to soil corrosion is improved to a greater extent.

I. Effects of RE element

A small amount of RE is added into the Zn-Al alloy coating, the RE exists in the Zn-Al alloy in three main forms, namely the RE is solid-dissolved in the matrix; the RE is segregated on a phase boundary, the grain boundary and a dendrite boundary; and the RE is solid-dissolved in the compound or exists in a compound form. Studies show that: the RE is solid-dissolved in the matrix to realize a certain solid dissolution strengthening effect, the formed spherical and short rod-like intermetallic compounds are distributed on the grain boundary or in the texture in the boundary to increase the deformation resistance; and the RE further forms many new phases containing the RE element with Al, Mg and other elements. By adding the RE element, the grains can be refined, the dendrites can realize the transition to fine lump-like shapes, the strength and the hardness are further improved, and the wear resistance is further significantly improved. As the trace rare earth is solid-dissolved in the eutectic phase, the corrosion electric potential of the alloy is reduced, which is even lower than the electric potential of Zn. Thus, the protective effect of a sacrificial anode is better than that of Zn. In addition, as the rare earth can purify the impurities and refine the grains, be enriched on the surface of the coating and form the dense and uniform oxide layer on the surface, the rare earth can prevent the external corrosive media from dispersing into the alloy to a considerable extent and further delay the oxidation and corrosion process. The main reasons that the corrosion resistance of the coating is affected by adding the RE element are as follows: the RE element can refine the particles of the coating, enable the particle size of the particles to be uniform, reduce the porosity of the coating, enable the texture of the coating to be dense, further reduce a corrosion channel, further reduce the surface active points in the corrosion process of the coating and further improve the corrosion resistance of the coating.

II. Effects of Mg element

A small amount of Mg element is added into the Zn-Al alloy coating, in the thermal spraying process, the Mg is more likely to be oxidized and evaporated and can form an oxide with a spinel structure preferentially, the formed spinel oxide can improve the cathode protection effect of Al in the coating, an Al-Mg thin layer further has a certain self-sealing capability, and the corrosion resistance of the Zn-Al alloy coating can be further improved. Simultaneously, the second phases can be turned into short rod-like particles, the particle size also becomes very small, and the particles are distributed in a dispersing manner so as to play a role in strengthening the Zn-Al alloy to a certain extent. When contacting the soil and other corrosive media, the main reasons that the corrosion resistance of the coating is improved by adding the Mg element are as follows: the Zn-Al-Mg-RE multi-element metal composite anti-corrosion coating generates a series of basic salts of Zn, hydroxides of Mg, hydrates of spinel oxides formed by Mg and Al and other corrosion products, these corrosion products can not only form a passivation film on the surface of the coating, but also effectively block pores of the coating and cut off a fast channel of the corrosive media; and after the corrosion reaction is performed for a certain period of time, due to the passivation film and the blockage of the corrosion products, it is very difficult for the corrosive media to enter the coating to achieve a coating/matrix interface through the defects on the surface of the coating, the self-sealing effect of the coating is more obvious, the stability of the corrosion product layer of the coating is greatly improved, and the metal coating further shows better corrosion resistance.

As the rare earth can purify the impurities on the surface of an iron base and increase the flowability of the electric arc-sprayed high-temperature molten metal particles on the surface of the nodular iron pipe, shot blasting treatment does not need to be performed on the surface of the nodular cast iron pipeline before spraying, and only moisture, grease, dust or loose oxide scales and other miscellaneous articles on the surface of the pipeline need to be removed. The material of the hole-sealing layer adopts the aqueous coating, the solvent type coating or the powder coating, the solvent type epoxy resin coating is most commonly used, the thickness of the coating is 70-150μm, the coating method can adopt spraying, brushing or rolling, and the hole-sealing layer has good anti-corrosion performance; and on the one hand, the pores of the Zn-Al-RE or the Zn-Al-Mg-RE metal coating can be filled, and on the other hand, the Zn-Al-RE or the Zn-Al-Mg-RE metal coating can be prevented from contacting the external corrosive media, and the corrosion rate of the Zn-Al-RE or the Zn-Al-Mg-RE metal coating can be effectively slowed down.

By adopting the above-mentioned technical solution, the following beneficial effects are produced:

1. The component range of the Zn-Al-RE or the Zn-Al-Mg-RE metal coating sprayed by the invention is wider, the proportion of all the elements in the coating can be arbitrarily adjusted in a larger range, the diversity of the Zn-Al-RE or the Zn-Al-Mg-RE metal coating can be met, and the Zn-Al-RE or the Zn-Al-Mg-RE metal coating can be suitable for multiple purposes.

2. The RE element can refine the particles of the coating, enable the particle size of the particles to be uniform, reduce the porosity of the coating, enable the texture of the coating to be dense, further reduce the corrosion channel, thus it is very difficult for the soil or other corrosive media to enter the coating to achieve the coating/matrix interface through the defects on the surface of the coating, enable the self-sealing effect of the coating to be more obvious, the stability of the corrosion product layer of the coating is greatly improved and further ZnAlRE metal coating shows better resistance to soil corrosion than the ZnAl coating. By adding the Mg element, the Zn-Al-Mg-RE multi-element metal composite anti-corrosion coating generates a series of basic salts of Zn, hydroxides of Mg, hydrates of spinel oxides formed by Mg and Al and other corrosion products, these corrosion products can not only form a passivation film on the surface of the coating, but also effectively block pores of the coating and cut off the fast channel of the soil or other corrosive media, so that the ZnAlMgRE metal coating can show the better resistance to soil corrosion than the ZnAl coating.

3. The hole-sealing layer is coated on the outer surface of the Zn-Al-RE or Zn-Al-Mg-RE multi-element metal coating, so the coating has good anti-corrosion performance, on the one hand, the pores of the metal coating can be filled, and on the other hand, the metal coating can be prevented from contacting the external corrosive media, and the corrosion rate of the coating in the soil or other environments can be effectively slowed down.

4. The economy of the metal coating is good, the existing wires in the market can be utilized for arbitrarily matching with the sprayed alloy or the pseudo-alloy layers, the manufacturing cost is low, the implementation is easy, the huge research and development cost of the alloy layers is reduced, and the research and development period is greatly shortened.

**Detailed Description of the Embodiments**

The test methods of performance parameters of a coating in the application are as follows:

1. Mechanical performances

(1) Test for testing bonding strength

A test for testing the bonding strength adopts a CSS-44100 electronic universal testing machine to measure the tensile bonding strength of a coating with a matrix. A test piece is loaded on the testing machine, the tensile speed is 1mm/min, a load is uniformly and continuously applied to the test piece till breaking, the maximum failure load of the test piece is recorded, and the bonding strength is calculated according to the following formula:

$$\sigma_b = \frac{4F}{\pi d^2}$$

In the formula, $\sigma_b$ refers to the bonding strength of the coating (N/mm$^2$); F refers to the maximum breaking load of the coating (N); and d refers to the diameter of the bonding surface at break of the coating (mm).

(2) Porosity testing

A gray-scale method is adopted for measuring the porosity, and the actually measured average value is taken as the porosity of the coating. A metallurgical microscope is used to observe the sectional appearance and the texture structure of the coating, under a metallurgical analysis system, three fields of view are randomly taken, the number of grids occupied by gaps in each field of view is determined, the total number of the grids occupied by the gaps of the three fields of view is compared with the number of the grids of the total field of view, and the ratio is the porosity of the coating.

2. Oceanic climate accelerated corrosion test

(1) Neutral salt spray test

An imported salt spray box is adopted, a test piece is cut from a nodular iron pipe product, the testing is performed according to ISO9227 standard, the testing conditions are as follows: the temperature is $35\pm2°C$, the pH is 6.5-7.2, the concentration of sodium chloride is $50g/l\pm5g/l$, the testing period is 9000h, and the red rust states of the coating before and after testing are observed.

(2) Test of electrochemical performance

A corrosion electric potential testing system of the coating comprises a PAR M273A constant-electric potential instrument and an M5210 lock-in amplifier, a three-electrode system is adopted, one of various 100-day salt spray test samples is taken as a working electrode, the area is $10\times10mm$, a saturated calomel electrode (SCE) is taken as a reference electrode and a platinum electrode is taken as an auxiliary electrode. A corrosion medium is 3.5% of NaCl solution, the test sample is soaked in the solution for 30 min before testing, and the measurement starts after electric potential is stable.

3. Test of resistance to soil corrosion

(1) Soil electrolysis accelerated corrosion test-quick comparison material selection test

State of test sample: complete coating
Test soil: undisturbed soil sample from test station, Dagang, Tianjin normal temperature 20% of water
Test period: 24h
Packaging way of test sample: (1) welding the sample, and sealing with silica gel; and weighing before testing; (2) measuring the exposed area before testing
Test instrument: direct-current regulated power supply 6V

The resistance to soil corrosion of the coating is analyzed and compared before and after testing by testing the weight loss.

(2) Soil high-temperature accelerated corrosion test-electrochemical test State of test sample: complete coating

Test soil: undisturbed soil sample from test station, Dagang, Tianjin, 20% of water content, soil resistivity of $0.06\Omega\cdot m$, very high content of Cl$^-$ and SO$_4^{2-}$, and normal temperature soil belonging to soil with extra-strong corrosive grade. The temperature is controlled at 70°C, and the accelerated corrosion testing is performed.
Test instrument: soil accelerated corrosion test box
Test contents: electrochemical testing is performed after the soil accelerated corrosion testing is performed on the test sample for 30 days, a corrosion electric potential testing system of the coating comprises a PAR M273A constant-electric potential instrument and an M5210 lock-in amplifier, a three-electrode system is adopted, a 30-day soil accelerated corrosion test sample is taken as a working electrode, the area is $10\times10mm$, a saturated calomel electrode (SCE) is taken as a reference electrode and a platinum electrode is taken as an auxiliary electrode. A corrosion medium is a saturated soil solution from Dagang, the test sample is soaked in the solution for 30 min before testing, and the measurement starts after electric potential is stable.

Embodiment 1

1. Zn-Al-La metal coating

For spraying wires, a Zn wire and an AIRE wire are selected, and the diameter of the alloy wires is 1.0-4.0mm.
An electric arc thermal spraying device consisting of a high-power spraying power supply, a spraying gun, a wire feeding mechanism, an air compressor and a control box is selected. Electric arc spraying is adopted, the selected wires are utilized to deposit a Zn-Al-La metal coating on a matrix of a nodular cast iron pipe, and the coating comprises the following elements in percentage by weight: 14.9% of Al, 0.1% of La and the balance of Zn. The weight per unit area of the zinc-aluminum-rare earth metal layer is 130g/m$^2$.

2. Sealing coat

An epoxy resin coating is adopted for spraying a hole-sealing layer, and the thickness of the coating is 100$\mu$m.
Contrast coating: in addition to the situation that the wire adopts an 85Zn-15Al alloy wire, the other contents are the same as those in Embodiment 1.

(1) Test results of adhesion

Table 1. Adhesion of Zinc-Aluminum Alloy Coating and Zinc-Aluminum-Rare Earth Pseudo-alloy Coating

| Type | Components | Bonding strength, MPa |
|---|---|---|
| Zinc-aluminum coating | 85Zn-15Al | 8.91 |
| Zinc-aluminum-rare earth metal coating | 85Zn-14.9Al-0.1La | 12.52 |

It can be seen from Table 1 that the adhesion of the zinc-aluminum-rare earth metal coating is higher than that of the zinc-aluminum coating, and the corrosion resistance of the coating is further improved.

2. Test results of porosity

Table 2. Porosity of Zinc-Aluminum Coating and Zinc-Aluminum-Rare Earth Coating

| Type of coating | | Porosity (%) |
|---|---|---|
| Zinc-aluminum coating | 85Zn-15Al | 4.5 |
| Zinc-aluminum-rare earth metal coating | 85Zn-14.9Al-0.1La | 2.5 |

It can be seen from Table 2 that the porosity of the zinc-aluminum-rare earth metal coating is lower than that of the zinc-aluminum coating, thereby being more conductive to preventing external corrosive media from contacting a metal matrix and further improving the corrosion resistance of the coating.

3. Accelerated corrosion test in oceanic atmosphere environment

(1) Neutral salt spray test

Table 3. Neutral Salt Spray Test Results of Zinc-Aluminum Coating and Zinc-Aluminum-Rare Earth Coating

| Type of coating | | Area of red rust (9000h) |
|---|---|---|
| Zinc-aluminum alloy coating | 85Zn-15Al | 55% |

(continued)

| Type of coating | | Area of red rust (9000h) |
|---|---|---|
| Zinc-aluminum-rare earth coating | 85Zn-14.9Al-0.1La | 0 |

Table 3 shows results of the 85Zn-15Al coating and the 85Zn-14.9Al-0.1La coating after 9000h of neutral salt spray test, and it can be seen from the table that the corrosion resistance of the zinc-aluminum-rare earth coating is significantly improved.

(2) Electrochemical test-alternating current impedance test

An alternating current impedance test is performed after the neutral salt spray test is performed on the coating for 100 days, and the polarization resistance after fitting is as shown in Table 4.

Table 4. Results of Alternating Current Impedance Spectrum Fitting Polarization Resistance of Two Coatings after 100 Days of Salt Spray Test

| Type of coating | | $R_p(\Omega.cm^2)$ |
|---|---|---|
| Zinc-aluminum alloy coating | 85Zn-15Al | 4668.5 |
| Zinc-aluminum-rare earth coating | 85Zn-14.9Al-0.1La | 9342.35 |

It can be seen from Table 4 that, after a rare earth element is added, the polarization resistance value of the Zn-Al-RE three-element metal coating is doubled in comparison with the 85Zn-15Al two-element metal coating, indicating that the corrosion resistance is more excellent.

4. Soil accelerated corrosion test

(1) Soil electrolysis accelerated corrosion test

Table 5. Soil Electrolysis Accelerated Corrosion Test Results of Two Coatings

| Type of coating | | Weight loss (g/cm$^2$) |
|---|---|---|
| Zinc-aluminum alloy coating | 85Zn-15Al | 0.0816 |
| Zinc-aluminum-rare earth coating | 85Zn-14.9Al-0.1La | 0.0513 |

It can be seen from Table 5 that the corrosion rate of zinc-aluminum-rare earth is reduced by 37.13% in comparison with the zinc-aluminum coating.

(2) High-temperature soil accelerated corrosion test-electrochemical alternating current impedance test

Table 6. Results of Alternating Current Impedance Spectrum Fitting Polarization Resistance of Two Coatings after 30 Days of High-temperature Accelerated Corrosion of Original Soil from Dagang

| Type of coating | | $R_p(\Omega.cm^2)$ |
|---|---|---|
| Zinc-aluminum alloy coating | 85Zn-15Al | 3828 |
| Zinc-aluminum-rare earth coating | 85Zn-14.9Al-0.1La | 5960 |

The larger the polarization resistance of the coating is, the lower the corrosion rate and the better the resistance to soil corrosion can be realized. It can be seen from
Table 6 that the polarization resistance value of the zinc-aluminum-rare earth three-element metal coating is much larger than that of the zinc-aluminum two-element metal coating, indicating that the resistance to soil corrosion of zinc-aluminum-rare earth is greatly improved in comparison with the zinc-aluminum coating.

Embodiment 2

1. A Zn-Al-Ce metal coating contains 15% of Al, 1% of Ce and the balance of Zn. The weight per unit area of the zinc-aluminum-rare earth metal layer is 200g/m$^2$.
2. Hole-sealing layer An epoxy resin coating is adopted for spraying a hole-sealing layer, and the thickness of the coating is 70μm. The other contents are the same as those the embodiment 1.

Contrast coating: in addition to the situation that the wire adopts an 85Zn-15Al alloy wire, the other contents are the same as those in Embodiment 2.

(1) Test results of adhesion

Table 7. Adhesion of Zinc-Aluminum Coating and Zinc-Aluminum-Rare Earth Coating

| Type of coating | Components | Bonding strength, MPa |
|---|---|---|
| Zinc-aluminum coating | 85Zn-15Al | 8.91 |
| Zinc-aluminum-rare earth coating | 84Zn-15Al-1Ce | 13.85 |

It can be seen from Table 7 that the adhesion of the zinc-aluminum-rare earth coating is higher than that of the zinc-aluminum alloy coating, and the corrosion resistance of the coating is further improved.

(2) Test results of porosity

Table 8. Porosity of Zinc-Aluminum Alloy Coating and Zinc-Aluminum-Rare Earth Pseudo-alloy Coating

| Type of coating | | Porosity (%) |
|---|---|---|
| Zinc-aluminum coating | 85Zn-15Al | 4.5 |
| Zinc-aluminum-rare earth coating | 84Zn-15Al-1Ce | 2.28 |

It can be seen from Table 8 that the porosity of the zinc-aluminum-rare earth coating is far lower than that of the zinc-aluminum alloy coating, thereby being more conductive to preventing external corrosive media from contacting a metal matrix and further improving the corrosion resistance of the coating.

(3) Accelerated corrosion test in oceanic atmosphere environment

(1) Neutral salt spray test

Table 9. Neutral Salt Spray Test Results of Zinc-Aluminum Coating and Zinc-Aluminum-Rare Earth Coating

| Type of coating | | Area of red rust (9000h) |
|---|---|---|
| Zinc-aluminum alloy coating | 85Zn-15Al | 55% |
| Zinc-aluminum-rare earth coating | 84Zn-15Al-1Ce | 0 |

Table 9 shows results of the 85Zn-15Al coating and the 84Zn-15Al-1Ce coating after 9000h of neutral salt spray test, and it can be seen from the table that the corrosion resistance of the zinc-aluminum-rare earth coating is significantly improved.

(2) Electrochemical test-alternating current impedance test

An alternating current impedance test is performed after the neutral salt spray test is performed on the coating for 100 days, and the polarization resistance after fitting is as shown in Table 10.

Table 10. Results of Alternating Current Impedance Spectrum Fitting Polarization Resistance of Two Coatings after 100 Days of Salt Spray Test

| Type of coating | | $R_p(\Omega.cm^2)$ |
|---|---|---|
| Zinc-aluminum alloy coating | 85Zn-15Al | 4668.5 |
| Zinc-aluminum-rare earth coating | 84Zn-15Al-1Ce | 9122.0 |

It can be seen from Table 10 that, after a rare earth element is added, the polarization resistance value of the Zn-Al-RE three-element metal coating is increased by 94.5% in comparison with the 85Zn-15Al two-element metal coating, indicating that the corrosion resistance is much more excellent.

4. Soil accelerated corrosion test

(1) Soil electrolysis accelerated corrosion test

Table 11. Soil Electrolysis Accelerated Corrosion Test Results of Two Coatings

| Type of coating | | Weight loss (g/cm²) |
|---|---|---|
| Zinc-aluminum alloy coating | 85Zn-15Al | 0.0816 |
| Zinc-aluminum-rare earth coating | 84Zn-15Al-1Ce | 0.055 |

It can be seen from Table 11 that the corrosion rate of zinc-aluminum-rare earth is reduced by 32.6% in comparison with the zinc-aluminum coating.

(2) High-temperature soil accelerated corrosion test-electrochemical alternating current impedance test

Table 12. Results of Alternating Current Impedance Spectrum Fitting Polarization Resistance of Two Coatings after 30 Days of High-temperature Accelerated Corrosion of Original Soil from Dagang

| Type of coating | | $R_p(\Omega.cm^2)$ |
|---|---|---|
| Zinc-aluminum alloy coating | 85Zn-15Al | 3828 |
| Zinc-aluminum-rare earth coating | 84Zn-15Al-1Ce | 6050 |

The larger the polarization resistance of the coating is, the lower the corrosion rate and the better the resistance to soil corrosion can be realized. It can be seen from

Table 12 that the polarization resistance value of the zinc-aluminum-rare earth three-element metal coating is much larger than that of the zinc-aluminum two-element metal coating, indicating that the resistance to soil corrosion of zinc-aluminum-rare earth is greatly improved in comparison with the zinc-aluminum coating.

Embodiment 3

1. Zn-Al-La pseudo-alloy layer

For spraying wires, a Zn-Al powder-wrapping wire and a Zn-Al-La alloy wire are selected, and the diameter of the alloy wires is 1.0-4.0mm.

An electric arc thermal spraying device consisting of a high-power spraying power supply, a spraying gun, a wire feeding mechanism, an air compressor and a control box is selected. Electric arc spraying is adopted, the selected wires are utilized to deposit a Zn-Al-RE pseudo-alloy layer on a matrix of a nodular cast iron pipe, and the coating comprises the following elements in percentage by weight: 20% of Al, 0.02% of La and the balance of Zn. The weight per unit area of the zinc-aluminum-rare earth pseudo-alloy layer is 200g/m$^2$.

2. Hole-sealing layer

An asphalt coating is adopted for spraying a hole-sealing layer, and the thickness of the coating is 100$\mu$m.

Contrast coating: in addition to the situation that the wire adopts an 85Zn-15Al alloy wire, the other contents are the same as those in Embodiment 3.

(1) Test results of adhesion

Table 13. Adhesion of Zinc-Aluminum Alloy Coating and Zinc-Aluminum-Rare Earth Pseudo-alloy Coating

| Type | Components | Bonding strength, MPa |
|---|---|---|
| Zinc-aluminum alloy coating | 85Zn-15Al | 8.91 |
| Zinc-aluminum-rar e earth coating | 79.98Zn-20Al-0.02La | 15.52 |

It can be seen from Table 13 that the adhesion of the zinc-aluminum-rare earth pseudo-alloy coating is higher than that of the zinc-aluminum alloy coating, and the corrosion resistance of the coating is further improved.

2. Test results of porosity

Table 14. Porosity of Zinc-Aluminum Alloy Coating and Zinc-Aluminum-Rare Earth Pseudo-alloy Coating

| Type of coating | | Porosity (%) |
|---|---|---|
| Zinc-aluminum alloy coating | 85Zn-15Al | 4.5 |
| Zinc-aluminum-rare earth coating | 79.98Zn-20Al-0.02La La | 3.0 |

It can be seen from Table 14 that the porosity of the zinc-aluminum-rare earth pseudo-alloy coating is lower than that of a pure zinc coating or the zinc-aluminum alloy coating, thereby being more conductive to preventing external corrosive media from contacting a metal matrix and further improving the corrosion resistance of the coating.

3. Accelerated corrosion test in oceanic atmosphere environment

(1) Neutral salt spray test

Table 15. Neutral Salt Spray Test Results of Zinc-Aluminum Coating and Zinc-Aluminum-Rare Earth Coating

| Type of coating | | Area of red rust (9000h) |
|---|---|---|
| Zinc-aluminum alloy coating | 85Zn-15Al | 55% |
| Zinc-aluminum-rare earth coating | 79.98Zn-20Al-0.02La | 0 |

Table 15 shows results of the 85Zn-15Al coating and the 79.98Zn-20Al-0.02La coating after 9000h of neutral salt spray test, and it can be seen from the table that the corrosion resistance of the zinc-aluminum-rare earth coating is significantly improved.

(2) Electrochemical test-alternating current impedance test

An alternating current impedance test is performed after the neutral salt spray test is performed on the coating for 100 days, and the polarization resistance after fitting is as shown in Table 16.

Table 16. Results of Alternating Current Impedance Spectrum Fitting Polarization Resistance of Two Coatings after 100 Days of Salt Spray Test

| Type of coating | | $R_p(\Omega.cm^2)$ |
|---|---|---|
| Zinc-aluminum alloy coating | 85Zn-15Al | 4668.5 |
| Zinc-aluminum-rare earth coating | 79.98Zn-20Al-0.02La | 9380.0 |

It can be seen from Table 16 that, after a rare earth element is added, the polarization resistance value of the Zn-Al-RE three-element metal coating is doubled in comparison with the 85Zn-15Al two-element metal coating, indicating that the corrosion resistance is much more excellent.

4. Soil accelerated corrosion test

(1) Soil electrolysis accelerated corrosion test

Table 17. Soil Electrolysis Accelerated Corrosion Test Results of Two Coatings

| Type of coating | | Weight loss (g/cm$^2$) |
|---|---|---|
| Zinc-aluminum alloy coating | 85Zn-15Al | 0.0816 |
| Zinc-aluminum-rare earth coating | 79.98Zn-20Al-0.02La | 0.0495 |

It can be seen from Table 17 that the corrosion rate of zinc-aluminum-rare earth is reduced by 39.3% in comparison with the zinc-aluminum coating.

(2) High-temperature soil accelerated corrosion test-electrochemical alternating current impedance test

Table 18. Results of Alternating Current Impedance Spectrum Fitting Polarization Resistance of Two Coatings after 30 Days of High-temperature Accelerated Corrosion of Original Soil from Dagang

| Type of coating | Components of coating | $R_p(\Omega.cm^2)$ |
|---|---|---|
| Zinc-aluminum alloy coating | 85Zn-15Al | 3828 |
| Zinc-aluminum-rare earth coating | 79.98Zn-20Al-0.02La | 6312 |

The larger the polarization resistance of the coating is, the lower the corrosion rate and the better the resistance to soil corrosion can be realized. It can be seen from Table 18 that, after a rare earth element is added, the polarization resistance value of the zinc-aluminum-rare earth three-element metal coating is much larger than that of the zinc-aluminum two-element metal coating, indicating that the resistance to soil corrosion of zinc-aluminum-rare earth is greatly improved in comparison with the zinc-aluminum coating.

Embodiment 4

1. Spraying of ZnAlLaCe alloy layer

Type of spraying wires: two ZnAlLaCe alloy wires are adopted, and the diameter of the alloy wires is 4.0mm.
Through electric arc spraying, the ZnAlLaCe alloy wires are utilized to deposit a ZnAlLaCe alloy coating on a matrix of a nodular cast iron pipe, and the coating comprises the following components in percentage by weight: 14.9% of Al, 0.1% of La + Ce and the balance of Zn.

2. Coating of hole-sealing sealing layer

An epoxy resin coating is adopted for spraying a hole-sealing sealing layer, and the thickness of the coating is 150μm.

Contrast coating: in addition to the situation that the wire adopts an 85Zn-15Al alloy wire, the other contents are the same as those in Embodiment 4.

(1) Test results of adhesion

Table 19. Adhesion of Zinc-Aluminum Alloy Coating and Zinc-Aluminum-Rare Earth Alloy Coating

| Type of coating | Components of coating | Bonding strength (Mpa) |
|---|---|---|
| Zinc-aluminum alloy coating | 85Zn-15Al | 8.91 |
| Zinc-aluminum -rare earth alloy coating | 85Zn-14.9Al-0.1(La+Ce) | 15.56 |

It can be seen from Table 19 that the adhesion of the zinc-aluminum-rare earth alloy coating is higher than that of the zinc-aluminum alloy coating, and the corrosion resistance of the coating is further improved.

(2) Test results of porosity

Table 20. Porosity of Zinc-Aluminum Alloy Coating and Zinc-Aluminum-Rare Earth Alloy Coating

| Type of coating | Components of coating | Porosity (%) |
|---|---|---|
| Zinc-aluminum alloy coating | 85Zn-15Al | 4.5 |
| Zinc-aluminum -rare earth alloy coating | 85Zn-14.9Al-0.1(La+Ce) | 1.5 |

It can be seen from Table 20 that the porosity of the zinc-aluminum-rare earth alloy coating is lower than that of the zinc-aluminum coating, thereby being more conductive to preventing external corrosive media from contacting a metal matrix and further improving the corrosion resistance of the coating.

3. Accelerated corrosion test in oceanic atmosphere environment

(1) Neutral salt spray test

Table 21. Neutral Salt Spray Test Results of Zinc-Aluminum Coating and Zinc-Aluminum-Rare Earth Coating

| Type of coating | Components of coating | Area of red rust (9000h) |
|---|---|---|
| Zinc-aluminum alloy coating | 85Zn-15Al | 55% |
| Zinc-aluminum -rare earth coating | 85Zn-14.9Al-0.1(La+Ce) | 0 |

Table 21 shows results of the 85Zn-15Al coating and the 85Zn-14.9Al-0.1(La+Ce) coating after 9000h of neutral salt spray test, and it can be seen from the table that the corrosion resistance of the zinc-aluminum-rare earth coating is significantly improved.

(2) Electrochemical test-alternating current impedance test

An alternating current impedance test is performed after the neutral salt spray test is performed on the coating for 100 days, and the polarization resistance after fitting is as shown in Table 22.

Table 22. Results of Alternating Current Impedance Spectrum Fitting Polarization Resistance of Two Coatings after 100 Days of Salt Spray Test

| Type of coating | | $R_p(\Omega.cm^2)$ |
| --- | --- | --- |
| Zinc-aluminum alloy coating | 85Zn-15Al | 4668.5 |
| Zinc-aluminum-rare earth coating | 85Zn-14.9 Al-0.1 (La+Ce) | 9450.0 |

It can be seen from Table 22 that the polarization resistance value of the 85Zn-14.9Al-0.1(La+Ce) alloy coating is doubled in comparison with the 85Zn-15Al two-element metal coating, indicating that the corrosion resistance is much more excellent.

4. Soil accelerated corrosion test

(1) Soil electrolysis accelerated corrosion test

Table 23. Soil Electrolysis Accelerated Corrosion Test Results of Two Coatings

| Type of coating | | Weight loss (g/cm$^2$) |
| --- | --- | --- |
| Zinc-aluminum alloy coating | 85Zn-15Al | 0.0816 |
| Zinc-aluminum-rare earth coating | 85Zn-14.9Al-0.1(La+Ce) | 0.0490 |

It can be seen from Table 23 that the corrosion rate of zinc-aluminum-rare earth is reduced by 40% in comparison with the zinc-aluminum coating, and the resistance to soil corrosion is obviously improved.

(2) High-temperature soil accelerated corrosion test-electrochemical alternating current impedance test

Table 24. Results of Alternating Current Impedance Spectrum Fitting Polarization Resistance of Two Coatings after 30 Days of High-temperature Accelerated Corrosion of Original Soil from Dagang

| Type of coating | Components of coating | $R_p(\Omega.cm^2)$ |
| --- | --- | --- |
| Zinc-aluminum alloy coating | 85Zn-15Al | 3828 |
| Zinc-aluminum-rare earth coating | 85Zn-14.9 Al-0.1 (La+Ce) | 6384 |

The larger the polarization resistance of the coating is, the lower the corrosion rate and the better the resistance to soil corrosion can be realized. It can be seen from Table 24 that, after a rare earth element is added, the polarization resistance value of the zinc-aluminum-rare earth three-element metal coating is much larger than that of the zinc-aluminum two-element metal coating, indicating that the resistance to soil corrosion of zinc-aluminum-rare earth is greatly improved in comparison with the zinc-aluminum coating.

Embodiment 5

1. Zn-Al-Mg-La pseudo-alloy layer

For spraying wires, an Al-Mg alloy wire and a Zn-Al-La alloy wire are selected, and the diameter of the alloy wires is 4.0mm.

An electric arc thermal spraying device consisting of a high-power spraying power supply, a spraying gun, a wire feeding mechanism, an air compressor and a control box is selected, and the alloy wire of φ4.0mm, comprising 85% by weight of Zn, 14.5% by weight of Al and 0.5% by weight of La, and the alloy wire of φ4.0mm, comprising 95% by weight of Al and 5% by weight of Mg, are taken as metal wires for electric arc thermal spraying on the surface of a pipeline according to 130g/m$^2$ to form a Zn-Al-Mg-La multi-element pseudo-alloy coating. Components of coating: 84.5% of Zn, 14.2% of Al, 1.0% of Mg and 0.2% of La.

2. Hole-sealing layer

An asphalt coating is adopted for spraying a hole-sealing layer, and the thickness of the coating is 100μm.
Contrast coating: in addition to the situation that the wire adopts an 85Zn-15Al alloy wire, the other contents are the same as those in Embodiment 5.

(1) Test results of adhesion

Table 25. Adhesion of Zinc-Aluminum Alloy Coating and Zinc-Aluminum-Magnesium-Rare Earth Pseudo-allo Coating

| Type | Components | Bonding strength, MPa |
|---|---|---|
| Zinc-aluminum alloy coating | 85Zn-15Al | 8.91 |
| Zinc-aluminum-magn esium-rare earth coating | 84.5Zn-14.3Al-1.0Mg-0.2La | 16.0 |

It can be seen from Table 25 that the adhesion of the zinc-aluminum-magnesium-rare earth pseudo-alloy coating is higher than that of the zinc-aluminum alloy coating, and the corrosion resistance of the coating is further improved.

2. Test results of porosity

Table 26. Porosity of Zinc-Aluminum Alloy Coating and Zinc-Aluminum-Magnesium-Rare Earth Pseudo-alloy Coating

| Type of coating | | Porosity (%) |
|---|---|---|
| Zinc-aluminum alloy coating | 85Zn-15Al | 4.5 |
| Zinc-aluminum-magnesium-r are earth coating | 84.5Zn-14.3Al-1.0Mg-0.2La La | 1.5 |

It can be seen from Table 26 that the porosity of the zinc-aluminum-magnesium-rare earth pseudo-alloy coating is lower than that of a pure zinc coating or the zinc-aluminum alloy coating, thereby being more conductive to preventing external corrosive media from contacting a metal matrix and further improving the corrosion resistance of the coating.

3. Accelerated corrosion test in oceanic atmosphere environment

(1) Neutral salt spray test

Table 27. Neutral Salt Spray Test Results of Zinc-Aluminum Coating and Zinc-Aluminum-Magnesium-Rare Earth Coating

| Type of coating | | Area of red rust (9000h) |
|---|---|---|
| Zinc-aluminum alloy coating | 85Zn-15Al | 55% |
| Zinc-aluminum-magnesium-rare earth coating | 84.5Zn-14.3Al-1.0Mg-0.2La | 0 |

Table 27 shows results of the 85Zn-15Al coating and the 84.5Zn-14.3Al-1.0Mg-0.2La coating after 9000h of neutral salt spray test, and it can be seen from the table that the corrosion resistance of the zinc-aluminum-magnesium-rare earth coating is significantly improved.

(2) Electrochemical test-alternating current impedance test

An alternating current impedance test is performed after the neutral salt spray test is performed on the coating for 100 days, and the polarization resistance after fitting is as shown in Table 28.

Table 28. Results of Alternating Current Impedance Spectrum Fitting Polarization Resistance of Two Coatings after 100 Days of Salt Spray Test

| Type of coating | | $R_p(\Omega.cm^2)$ |
|---|---|---|
| Zinc-aluminum alloy coating | 85Zn-15Al | 4668.5 |
| Zinc-aluminum -magnesium-rare earth coating | 84.5Zn-14.3Al-1.0Mg-0.2La | 9328.0 |

It can be seen from Table 28 that, after magnesium and rare earth elements are added, the polarization resistance value of the 84.5Zn-14.3Al-1.0Mg-0.2La four-element metal coating is doubled in comparison with the 85Zn-15Al two-element metal coating, indicating that the corrosion resistance is much more excellent.

4. Soil accelerated corrosion test

(1) Soil electrolysis accelerated corrosion test

Table 29. Soil Electrolysis Accelerated Corrosion Test Results of Two Coatings

| Type of coating | | Weight loss (g/cm$^2$) |
|---|---|---|
| Zinc-aluminum alloy coating | 85Zn-15Al | 0.0816 |
| Zinc-aluminum -magnesium-rare earth coating | 84.5Zn-14.3Al-1.0Mg-0.2La | 0.0465 |

It can be seen from Table 29 that the corrosion rate of zinc-aluminum-magnesium-rare earth is reduced by 43% in comparison with the zinc-aluminum coating.

(2) High-temperature soil accelerated corrosion test-electrochemical alternating current impedance test

Table 30. Results of Alternating Current Impedance Spectrum Fitting Polarization Resistance of Two Coatings after 30 Days of High-temperature Accelerated Corrosion of Original Soil from Dagang

| Type of coating | | $R_p(\Omega.cm^2)$ |
|---|---|---|
| Zinc-aluminum alloy coating | 85Zn-15Al | 3828 |
| Zinc-aluminum -magnesium-rare earth coating | 84.5Zn-14.3Al-1.0Mg-0.2La | 6403 |

The larger the polarization resistance of the coating is, the lower the corrosion rate and the better the resistance to soil corrosion can be realized. It can be seen from
Table 30 that, after the rare earth element is added, the polarization resistance value of the zinc-aluminum-magnesium-rare earth four-element metal coating is much larger than that of the zinc-aluminum two-element metal coating, indicating that the resistance to soil corrosion of zinc-aluminum-magnesium-rare earth is greatly improved in comparison with the zinc-aluminum coating.

Embodiment 6

1. Zn-Al-Mg-Ce pseudo-alloy layer

For spraying wires, an Al-Mg alloy wire and a Zn-Ce alloy wire are selected, and the diameter of the wires is φ2-3.0mm.

An electric arc thermal spraying device consisting of a high-power spraying power supply, a spraying gun, a wire feeding mechanism, an air compressor and a control box is selected, and the alloy wire of φ3-4.0mm, comprising 99.5% by weight of Zn and 0.5% by weight of Ce, and the alloy wire of φ2-3.0mm, comprising 97% by weight of Al and 3% by weight of Mg, are taken as metal wires for electric arc thermal spraying on the surface of a pipeline according to 150g/m² to form a Zn-Al-Mg-Ce four-element pseudo-alloy coating. The coating comprises the following components: 76% of Zn, 22% of Al, 1.9% of Mg and 0.1% of Ce.

2. Hole-sealing layer

An asphalt coating is adopted for spraying a hole-sealing layer, and the thickness of the coating is 100μm.

Contrast coating: in addition to the situation that the wire adopts an 85Zn-15Al alloy wire, the other contents are the same as those in Embodiment 6.

(1) Test results of adhesion

Table 31. Adhesion of Zinc-Aluminum Alloy Coating and Zinc-Aluminum-Magnesium-Rare Earth Pseudo-alloy Coating

| Type | Components | Bonding strength, MPa |
|---|---|---|
| Zinc-aluminum alloy coating | 85Zn-15Al | 8.91 |
| Zinc-aluminum-magn esium-rare earth coating | 76Zn-22Al-1.9Mg-0.1Ce | 14.0 |

It can be seen from Table 31 that the adhesion of the zinc-aluminum-magnesium-rare earth pseudo-alloy coating is higher than that of the zinc-aluminum alloy coating, and the corrosion resistance of the coating is further improved.

2. Test results of porosity

Table 32. Porosity of Zinc-Aluminum Alloy Coating and Zinc-Aluminum-Magnesium-Rare Earth Pseudo-alloy Coating

| Type of coating | | Porosity (%) |
|---|---|---|
| Zinc-aluminum alloy coating | 85Zn-15Al | 4.5 |
| Zinc-aluminum-magnesium -rare earth coating | 76Zn-22Al-1.9Mg-0.1 Ce | 1.8 |

It can be seen from Table 32 that the porosity of the zinc-aluminum-magnesium-rare earth pseudo-alloy coating is lower than that of a pure zinc coating or the zinc-aluminum alloy coating, thereby being more conductive to preventing external corrosive media from contacting a metal matrix and further improving the corrosion resistance of the coating.

3. Accelerated corrosion test in oceanic atmosphere environment

(1) Neutral salt spray test

Table 33. Neutral Salt Spray Test Results of Zinc-Aluminum Coating and Zinc-Aluminum-Magnesium-Rare Earth Coating

| Type of coating | | Area of red rust (9000h) |
|---|---|---|
| Zinc-aluminum alloy coating | 85Zn-15Al | 55% |
| Zinc-aluminum-magnesium-rare earth coating | 76Zn-22Al-1.9Mg-0.1Ce | 0 |

Table 33 shows results of the 85Zn-15Al coating and the 76Zn-22Al-1.9Mg-0.1Ce coating after 9000h of neutral salt spray test, and it can be seen from the table that the corrosion resistance of the zinc-aluminum-magnesium-rare earth coating is significantly improved.

(2) Electrochemical test-alternating current impedance test

An alternating current impedance test is performed after the neutral salt spray test is performed on the coating for 100 days, and the polarization resistance after fitting is as shown in Table 34.

Table 34. Results of Alternating Current Impedance Spectrum Fitting Polarization Resistance of Two Coatings after 100 Days of Salt Spray Test

| Type of coating | | $R_p(\Omega.cm^2)$ |
|---|---|---|
| Zinc-aluminum alloy coating | 85Zn-15Al | 4668.5 |
| Zinc-aluminum -magnesium-rare earth coating | 76Zn-22Al-1.9Mg-0.1Ce | 9425.0 |

It can be seen from Table 34 that, after magnesium and rare earth elements are added, the polarization resistance value of the 76Zn-22Al-1.9Mg-0.1Ce four-element metal coating is doubled in comparison with the 85Zn-15Al two-element metal coating, indicating that the corrosion resistance is much more excellent.

4. Soil accelerated corrosion test

(1) Soil electrolysis accelerated corrosion test

Table 35. Soil Electrolysis Accelerated Corrosion Test Results of Two Coatings

| Type of coating | | Weight loss (g/cm$^2$) |
|---|---|---|
| Zinc-aluminum alloy coating | 85Zn-15Al | 0.0816 |
| Zinc-aluminum-magnesium-rare earth coating | 76Zn-22Al-1.9Mg-0.1Ce | 0.0405 |

It can be seen from Table 35 that the corrosion rate of zinc-aluminum-magnesium-rare earth is reduced by 50.4% in comparison with the zinc-aluminum coating.

(2) High-temperature soil accelerated corrosion test-electrochemical alternating current impedance test

Table 36. Results of Alternating Current Impedance Spectrum Fitting Polarization Resistance of Two Coatings after 30 Days of High-temperature Accelerated Corrosion of Original Soil from Dagang

| Type of coating | | $R_p(\Omega.cm^2)$ |
|---|---|---|
| Zinc-aluminum alloy coating | 85Zn-15Al | 3828 |

(continued)

| Type of coating | | $R_p(\Omega.cm^2)$ |
|---|---|---|
| Zinc-aluminum-magnesium-rare earth coating | 76Zn-22Al-1.9Mg-0.1Ce | 6448 |

The larger the polarization resistance of the coating is, the lower the corrosion rate and the better the resistance to soil corrosion can be realized. It can be seen from Table 36 that, after the rare earth element is added, the polarization resistance value of the zinc-aluminum-magnesium-rare earth four-element metal coating is much larger than that of the zinc-aluminum two-element metal coating, indicating that the resistance to soil corrosion of zinc-aluminum-magnesium-rare earth is greatly improved in comparison with the zinc-aluminum coating.

Embodiment 7

1. Zn-Al-Mg-La pseudo-alloy layer

For spraying wires, two Zn-Al-Mg-La cored wires are selected, and the diameter of the wires is φ3-4.0mm.
An electric arc thermal spraying device consisting of a high-power spraying power supply, a spraying gun, a wire feeding mechanism, an air compressor and a control box is selected, and the two multi-element powder-wrapping wires of φ3-4mm, comprising 70% of Zn, 27.4% of Al, 2.0% of Mg and 0.6% of La are taken as metal wires for electric arc thermal spraying on the surface of a pipeline according to 400g/m² to form a Zn-Al-Mg-La multi-element pseudo-alloy coating. The coating comprises the following components: 70% of Zn, 27.4% of Al, 2.0% of Mg and 0.6% of La.

(3) Coating of hole-sealing finishing coating

A silicate coating is brushed on the surface of the multi-element pseudo-alloy layer to perform hole-sealing treatment, and the thickness of the hole-sealing finishing layer is 150μm.
Contrast coating: in addition to the situation that the wire adopts an 85Zn-15Al alloy wire, the other contents are the same as those in Embodiment 7.

(1) Test results of adhesion

Table 37. Adhesion of Zinc-Aluminum Alloy Coating and Zinc-Aluminum-Magnesium-Rare Earth Pseudo-alloy Coating

| Type | Components | Bonding strength, MPa |
|---|---|---|
| Zinc-aluminum alloy coating | 85Zn-15Al | 8.91 |
| Zinc-aluminum-magn esium-rare earth | 70Zn-27.4Al-2.0Mg-0.6La | 16.5 |
| coating | | |

It can be seen from Table 37 that the adhesion of the zinc-aluminum-magnesium-rare earth pseudo-alloy coating is higher than that of the zinc-aluminum alloy coating, and the corrosion resistance of the coating is further improved.

2. Test results of porosity

Table 38. Porosity of Zinc-Aluminum Alloy Coating and Zinc-Aluminum-Magnesium-Rare Earth Pseudo-alloy Coating

| Type of coating | | Porosity (%) |
|---|---|---|
| Zinc-aluminum alloy coating | 85Zn-15Al | 4.5 |

(continued)

| Type of coating | | Porosity (%) |
|---|---|---|
| Zinc-aluminum-magnesium-rare earth coating | 70Zn-27.4Al-2.0Mg-0.6La | 1.4 |

It can be seen from Table 38 that the porosity of the zinc-aluminum-magnesium-rare earth pseudo-alloy coating is lower than that of a pure zinc coating or the zinc-aluminum alloy coating, thereby being more conductive to preventing external corrosive media from contacting a metal matrix and further improving the corrosion resistance of the coating.

3. Accelerated corrosion test in oceanic atmosphere environment

(1) Neutral salt spray test

Table 39. Neutral Salt Spray Test Results of Zinc-Aluminum Coating and Zinc-Aluminum-Magnesium-Rare Earth Coating

| Type of coating | | Area of red rust (9000h) |
|---|---|---|
| Zinc-aluminum alloy coating | 85Zn-15Al | 55% |
| Zinc-aluminum-magnesium-rare earth coating | 70Zn-27.4Al-2.0Mg-0.6La | 0 |

Table 39 shows results of the 85Zn-15Al coating and the 70Zn-27.4Al-2.0Mg-0.6La coating after 9000h of neutral salt spray test, and it can be seen from the table that the corrosion resistance of the zinc-aluminum-magnesium-rare earth coating is significantly improved.

(2) Electrochemical test-alternating current impedance test

An alternating current impedance test is performed after the neutral salt spray test is performed on the coating for 100 days, and the polarization resistance after fitting is as shown in Table 40.

Table 40. Results of Alternating Current Impedance Spectrum Fitting Polarization Resistance of Two Coatings after 100 Days of Salt Spray Test

| Type of coating | | $R_p$ ($\Omega.cm^2$) |
|---|---|---|
| Zinc-aluminum alloy coating | 85Zn-15Al | 4668.5 |
| Zinc-aluminum-magnesium-rare earth coating | 70Zn-27.4Al-2.0Mg-0.6La | 9876.8 |

It can be seen from Table 40 that, after magnesium and rare earth elements are added, the polarization resistance value of the 70Zn-27.4Al-2.0Mg-0.6La four-element metal coating is increased by more than twice in comparison with the 85Zn-15Al two-element metal coating, indicating that the corrosion resistance is much more excellent.

4. Soil accelerated corrosion test

(1) Soil electrolysis accelerated corrosion test

Table 41. Soil Electrolysis Accelerated Corrosion Test Results of Two Coatings

| Type of coating | | Weight loss ($g/cm^2$) |
|---|---|---|
| Zinc-aluminum alloy coating | 85Zn-15Al | 0.0816 |

(continued)

| Type of coating | | Weight loss (g/cm$^2$) |
|---|---|---|
| Zinc-aluminum-magnesium-rare earth coating | 70Zn-27.4Al-2.0Mg-0.6La | 0.0398 |

It can be seen from Table 41 that the corrosion rate of zinc-aluminum-magnesium-rare earth is reduced by 51.2% in comparison with the zinc-aluminum coating.

(2) High-temperature soil accelerated corrosion test-electrochemical alternating current impedance test

Table 42. Results of Alternating Current Impedance Spectrum Fitting Polarization Resistance of Two Coatings after 30 Days of High-temperature Accelerated Corrosion of Original Soil from Dagang

| Type of coating | | $R_p(\Omega.cm^2)$ |
|---|---|---|
| Zinc-aluminum alloy coating | 85Zn-15Al | 3828 |
| Zinc-aluminum-magnesium-rare earth coating | 70Zn-27.4Al-2.0Mg-0.6La | 6778 |

The larger the polarization resistance of the coating is, the lower the corrosion rate and the better the resistance to soil corrosion can be realized. It can be seen from Table 42 that, after the magnesium and the rare earth elements are added, the polarization resistance value of the zinc-aluminum-magnesium-rare earth four-element metal coating is much larger than that of the zinc-aluminum two-element metal coating, indicating that the resistance to soil corrosion of zinc-aluminum-magnesium-rare earth is greatly improved in comparison with the zinc-aluminum coating.

Embodiment 8:

A Zn-Al-Ce pseudo-alloy layer contains 40% of Al, 1% of Ce and the balance of Zn. The other contents are the same as those in the embodiment 6.

Embodiment 9

A Zn-Al-Mg-Pr pseudo-alloy layer contains 25% of Al, 1.2% of Mg, 2.0% of Pr and the balance of Zn. The other contents are the same as those in the embodiment 6.

Embodiment 10

A Zn-Al-Mg-Nd pseudo-alloy layer contains 35% of Al, 3.0% of Mg, 1.0% of Nd and the balance of Zn. The other contents are the same as those in the embodiment 6.

Embodiment 11

1. Zn-Al-Ce pseudo-alloy layer

For spraying wires, a Zn-Al-Ce powder-wrapping wire and a Zn-Al-Ce alloy wire are selected, and the diameter of the wires is 3.2mm.

An electric arc thermal spraying device consisting of a high-power spraying power supply, a spraying gun, a wire feeding mechanism, an air compressor and a control box is selected. Electric arc spraying is adopted, the selected wires are utilized to deposit a Zn-Al-Ce pseudo-alloy layer on a matrix of a nodular cast iron pipe, and the coating comprises the following elements in percentage by weight: 50% of Al, 8.0% of Ce and the balance of Zn. The weight per unit area of the zinc-aluminum-rare earth pseudo-alloy layer is 250g/m$^2$.

2. Hole-sealing layer

An asphalt coating is adopted for spraying a hole-sealing layer, and the thickness of the coating is 100$\mu$m.

Embodiment 12

1. Zn-Al-La pseudo-alloy layer

For spraying wires, a ZnLa alloy wire and a ZnAl alloy wire are selected, and the diameter of the alloy wires is 2.8mm.

An electric arc thermal spraying device consisting of a high-power spraying power supply, a spraying gun, a wire feeding mechanism, an air compressor and a control box is selected. Electric arc spraying is adopted, the selected wires are utilized to deposit a Zn-Al-La pseudo-alloy layer on a matrix of a nodular cast iron pipe, and the coating comprises the following elements in percentage by weight: 60% of Al, 10.0% of La and the balance of Zn. The weight per unit area of the zinc-aluminum-rare earth pseudo-alloy layer is $350g/m^2$.

2. Hole-sealing layer

A silica sol coating is adopted for spraying a hole-sealing layer, and the thickness of the coating is $100\mu m$.

By performing the performance tests which are the same as those in Embodiments 1-7 on the coatings in Embodiments 8-12, it is found that the adhesion of the pseudo-alloy coatings is 13.0-15.5Mpa, the porosity is 2.0-3.0%, the neutral salt spray testing time is 9000h, and the polarization resistance after 100 days of salt spray test is $9012\Omega.cm^2$.

The spraying wires can also select the following combination ways:

a Zn cored wire + a Zn-Al-RE alloy wire/Zn-Al-RE cored wire/Zn-Al-RE powder-wrapping wire;
an Al powder-wrapping wire + a ZnRE alloy wire/Zn-Al-RE cored wire/Zn-Al-RE powder-wrapping wire;
a Zn-Al-RE cored wire + a Zn-Al-RE powder-wrapping wire/ZnRE alloy wire/AlRE alloy wire/Zn-Al-RE alloy wire;
a Zn-Al-Mg alloy wire + a ZnAl alloy wire/ZnRE alloy wire/Zn-Al-RE alloy wire;
a ZnAl powder-wrapping wire + an Al-Mg-RE alloy wire/Zn-Al-RE alloy wire; and
a ZnRE cored wire + an AlRE alloy wire/Zn-Al-RE alloy wire.

The above embodiments are merely used for describing the preferred implementation ways of the invention rather than limiting the scope of the invention; and on the premise of not departing from the design spirit of the invention, those skilled in the field can make various deformations and improvements to the technical solution of the invention and all the variations and the improvements should fall within the protection scope defined by the claims of the invention.

## Industrial Applicability

In the anti-corrosion coating for the buried ferrous metal-based pipeline and the spraying method thereof, disclosed by the invention, production equipment used for spraying belong to existing mature equipment, the formed anti-corrosion coating can be widely applied to the field of composite anti-corrosion coatings, in particular to a strongly corrosive soil environment, and the anti-corrosion coating can produce a positive anti-corrosion effect and further has great market prospects and very strong industrial applicability.

## Claims

1. A ferrous metal-based pipeline suitable to be buried containing a composite anti-corrosion coating, **characterized in that** the anti-corrosion coating comprises a zinc-aluminum-rare earth pseudo-alloy comprising the following components in percentage by weight: 5-60% of Al, 0.02-10% of RE and the balance of Zn; and the zinc-aluminum-rare earth pseudo-alloy layer is prepared by adopting an electric arc spraying method.

2. A ferrous metal-based pipeline suitable to be buried containing a composite anti-corrosion coating according to claim 1, **characterized in that** a hole-sealing finishing layer is coated on the surface of the zinc-aluminum-rare earth pseudo-alloy layer.

3. A ferrous metal-based pipeline suitable to be buried containing a composite anti-corrosion coating according to claim 1 or 2, **characterized in that**,
in the zinc-aluminum-rare earth pseudo-alloy layer, a metal phase formed by zinc-aluminum-rare earth metal contains a zinc-rich phase, an aluminum-rich phase, a zinc-aluminum-rare earth alloy-rich phase and an intermetallic compound thereof, preferably, the contents by weight of the metal compounds are respectively as follows:

the zinc-rich phase accounts for 50.0-85.0%, the aluminum-rich phase accounts for 10.0-45.0%, the zinc-aluminum-rare earth alloy-rich phase and the intermetallic compound thereof account for 0.02-10%, and the sum is 100%;

further preferably, the zinc-rich phase accounts for 68.0-85.0%, the aluminum-rich phase accounts for 10.0-30.0% and the zinc-aluminum-rare earth alloy-rich phase and the intermetallic compound thereof account for 0.02-8%;

more preferably, the zinc-rich phase accounts for 73.0-85.0%, the aluminum-rich phase accounts for 12.0-25.0% and the zinc-aluminum-rare earth alloy-rich phase and the intermetallic compound thereof account for 0.02-5%;

wherein preferably, the zinc-rich phase comprises 58-98% of Zn, 1-40% of Al and 1-5.0% of RE; the aluminum-rich phase comprises 55-98% of Al, 1.5-40% of Zn and 0.01-5.0% of RE; and the zinc-aluminum-rare earth alloy-rich phase and the intermetallic compound thereof comprise 60-95% of Zn, 0.5-35% of Al and 0.1-10.0% of RE.

4. A ferrous metal-based pipeline suitable to be buried containing a composite anti-corrosion coating according to claim 2, **characterized in that**, preferably, the hole-sealing finishing layer is an aqueous coating layer, a solvent type coating layer or a powder coating layer, wherein the thickness of the hole-sealing finishing layer is 60-180$\mu$m.

5. A ferrous metal-based pipeline suitable to be buried containing a composite anti-corrosion coating according to claim 1, **characterized in that**, Zn accounts for 56-85% and Al accounts for 14-42%.

6. A ferrous metal-based pipeline suitable to be buried containing a composite anti-corrosion coating according to any of the claim 1 to 5, **characterized in that**, RE accounts for preferably 0.05-2%.

7. A ferrous metal-based pipeline suitable to be buried containing a composite anti-corrosion coating according to any of the claim 1 to 6, **characterized in that** the weight per unit area of the zinc-aluminum-rare earth alloy layer or the zinc-aluminum-rare earth pseudo-alloy layer is 130-400g/m$^2$.

8. A ferrous metal-based pipeline suitable to be buried containing a composite anti-corrosion coating according to any of the claim 1 to 7, **characterized in that** RE is at least one of lanthanum, cerium, praseodymium, neodymium, promethium, samarium, europium, gadolinium, terbium, dysprosium, holmium, erbium, thulium, ytterbium, lutetium, scandium and yttrium.

9. A ferrous metal-based pipeline suitable to be buried containing a composite anti-corrosion coating, **characterized in that** the anti-corrosion coating comprises a zinc-aluminum-magnesium-rare earth multi-element pseudo-alloy, preferably, a hole-sealing finishing layer is coated on the surface of the zinc-aluminum-magnesium-rare earth multi-element pseudo-alloy layer; and the ferrous metal-based pipeline is preferably an iron-based pipeline;

the zinc-aluminum-magnesium-rare earth multi-element pseudo-alloy layer comprises the following components in percentage by weight:

5-85% of Al;
0.01-5% of RE;
30-95% of Zn; and
0.05-10% of Mg.

10. A ferrous metal-based pipeline suitable to be buried containing a composite anti-corrosion coating according to claim 9, **characterized in that** in the zinc-aluminum-magnesium-rare earth multi-element pseudo-alloy layer, a metal phase formed by zinc-aluminum-magnesium-rare earth metal contains a zinc-rich phase, an aluminum-rich phase, an aluminum-magnesium alloy-rich phase and a small quantity of a zinc-aluminum-magnesium-rare earth alloy-rich phase and an intermetallic compound thereof, preferably, the contents by weight of the metal compounds are respectively as follows:

the zinc-rich phase accounts for 35.0-90.0%, the aluminum-rich phase accounts for 8.0-55.0%, the aluminum-magnesium alloy-rich phase accounts for 0.5-10.0%, the zinc-aluminum-magnesium-rare earth alloy-rich phase and the intermetallic compound thereof account for 0.01-5.0%, and the sum is 100%;

further preferably, the zinc-rich phase accounts for 50.0-85.0%, the aluminum-rich phase accounts for 10.0-45.0%, the aluminum-magnesium alloy-rich phase accounts for 0.5-8.0% and the zinc-aluminum-magnesium-rare earth alloy-rich phase and the intermetallic compound thereof account for 0.05-4.0%;

more preferably, the zinc-rich phase accounts for 65.0-80.0%, the aluminum-rich phase accounts for 15.0-33.0%, the aluminum-magnesium alloy-rich phase accounts for 0.5-5.0% and the zinc-aluminum-magnesium-rare earth alloy-rich phase and the intermetallic compound thereof account for 0.05-3.0%; preferably, the zinc-rich phase comprises 55-98% of Zn, 1-40% of Al, 0.01-10% of Mg and 0.01-5.0% of RE; the aluminum-rich phase comprises 50-90% of Al, 5-45% of Zn, 0.01-10% of Mg and 0.01-5.0% of RE; the aluminum-magnesium alloy-rich phase comprises 90-95% of Al, 1-5% of Mg and 0.01-5.0% of RE; and preferably, the zinc-aluminum-magnesium-rare earth alloy-rich phase and the intermetallic compound thereof comprise 60-90% of Zn, 5-30% of Al, 0.01-1.0% of Mg and 1-10.0% of RE.

**11.** A ferrous metal-based pipeline suitable to be buried containing a composite anti-corrosion coating according to claim 9, **characterized in that**, RE accounts for preferably 0.05-1%, and the content of Mg is 0.5-2.0%.

**12.** A ferrous metal-based pipeline suitable to be buried containing a composite anti-corrosion coating according to claim 9 or 11, **characterized in that** a preparation method of the zinc-aluminum-magnesium-rare earth multi-element pseudo-alloy layer can adopt equal-diameter constant-speed, equal-diameter different-speed and constant-speed different-diameter spraying ways.

**13.** A ferrous metal-based pipeline suitable to be buried containing a composite anti-corrosion coating according to claim 9 or 12, **characterized in that**, preferably, the hole-sealing finishing layer is an organic or inorganic coating layer, and the thickness of the hole-sealing layer is 100-150$\mu$m.

**14.** A ferrous metal-based pipeline suitable to be buried containing a composite anti-corrosion coating according to claim 9 or 13, **characterized in that** the weight per unit area of the zinc-aluminum-magnesium-rare earth multi-element pseudo-alloy layer is 130-400g/m$^2$.

**15.** A ferrous metal-based pipeline suitable to be buried containing a composite anti-corrosion coating according to claim 9 or 14, **characterized in that** the zinc-aluminum-magnesium-rare earth multi-element pseudo-alloy layer further comprises one or any combination of Cu, In, Mn, Sn, Li, Si, Ti and Pb.

**16.** A ferrous metal-based pipeline suitable to be buried containing a composite anti-corrosion coating according to claim 9 or 15, **characterized in that** RE is at least one of lanthanum, cerium, praseodymium, neodymium, promethium, samarium, europium, gadolinium, terbium, dysprosium, holmium, erbium, thulium, ytterbium, lutetium, scandium and yttrium; preferably at least one of lanthanum, cerium, praseodymium and neodymium; and more preferably, at least one of lanthanum and cerium.

**17.** A method for spraying the anti-corrosion coating on the ferrous metal-based pipeline suitable to be buried according to any one of claims 1-16, **characterized in that** electric arc spraying is adopted, and the method is as follows:

when the coating comprises ZnAlRE elements, depositing a ZnAlRE three-element pseudo-alloy layer on a pipe matrix by utilizing two wires with different compositions; preferably, forming a zinc-aluminum-rare earth pseudo-alloy coating by adopting a rare earth-zinc wire and an aluminum wire; when the coating comprises ZnAlMgRE elements, depositing a ZnAlMgRE four-element pseudo-alloy layer on the pipe matrix by utilizing two wires with the different compositions; preferably, forming a zinc-aluminum-magnesium-rare earth pseudo-alloy coating by adopting a rare earth-zinc wire and an aluminum-magnesium alloy wire; the wire/wires for the pseudo-alloy coating is/are selected from one or two of the following wires: ZnAlRE powder-wrapping wire, ZnAlRE cored wire, ZnAlRE alloy wire, Zn cored wire, Zn powder-wrapping wire, Al cored wire, Al powder-wrapping wire, AlRE cored wire, AlRE powder-wrapping wire, AlMg powder-wrapping wire, AlMg cored wire, ZnAl cored wire, ZnAl powder-wrapping wire, ZnRE alloy wire, ZnRE cored wire, ZnRE powder-wrapping wire, ZnAlMg alloy wire, ZnAlMg cored wire, ZnAlMg powder-wrapping wire, AlMgRE alloy wire, AlMgRE cored wire, AlMgRE powder-wrapping wire, ZnAlMgRE alloy wire and ZnAlMgRE cored wire.

**18.** A ferrous metal-based pipeline containing the composite anti-corrosion coating according to any of claims 1-16, **characterized in that** ferrous metal is iron, and the pipeline is a cast iron pipeline.

**19.** A ferrous metal-based pipeline containing the composite anti-corrosion coating according to claims 18, **characterized in that** the bonding strength between the anti-corrosion coating and the pipeline is 12.5-16.5Mpa.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101451243 B
- CN 201110111175